(19) Europäisches Patentamt
European Patent Office
Office européen des brevets

(11) **EP 0 504 401 B1**

(12) **EUROPEAN PATENT SPECIFICATION**

(45) Date of publication and mention
of the grant of the patent:
**02.04.1997 Bulletin 1997/14**

(21) Application number: **90914767.0**

(22) Date of filing: **05.10.1990**

(51) Int Cl.⁶: **F02D 1/02**, F02D 41/38

(86) International application number:
**PCT/JP90/01294**

(87) International publication number:
**WO 92/06286 (16.04.1992 Gazette 1992/09)**

(54) **PILOT-INJECTION CONTROL DEVICE**

VORRICHTUNG ZUR REGELUNG DER VOREINSPRITZUNG

DISPOSITIF DE COMMANDE DE PREINJECTION

(84) Designated Contracting States:
**DE FR GB**

(43) Date of publication of application:
**23.09.1992 Bulletin 1992/39**

(73) Proprietors:
• **NIPPONDENSO CO., LTD.**
**Kariya-city Aichi-pref., 448 (JP)**
• **NIPPON SOKEN, INC.**
**Nishio-Shi Aichi-Ken 445 (JP)**
• **TOYOTA JIDOSHA KABUSHIKI KAISHA**
**Aichi-ken 471 (JP)**

(72) Inventors:
• **IZAWA, Akihiro**
**Nukata-gun, Aichi-ken 444-01 (JP)**
• **SAKAKIBARA, Yasuyuki**
**Nishio-shi, Aichi-ken 445 (JP)**
• **ABE, Seiko**
**Okazaki-shi, Aichi-ken 444-02 (JP)**
• **ENOMOTO, Shigeiku**
**Hoi-gun, Aichi-ken 441-03 (JP)**
• **YANAGIHARA, Hiromichi**
**Gotenba-shi, Shizuoka-ken (JP)**

• **HENDA, Yoshimitsu**
**Numazu-shi, Shizuoka-ken 410 (JP)**
• **MATSUMURA, Toshimi**
**Chita-gun, Aichi-ken 470-21 (JP)**
• **SHIBATA, Masamichi**
**Anjo-shi, Aichi-ken 446 (JP)**

(74) Representative: **KUHNEN, WACKER & PARTNER**
**Patent- und Rechtsanwaltsbüro,**
**Alois-Steinecker-Strasse 22**
**85354 Freising (DE)**

(56) References cited:
DE-A- 3 525 408          JP-A- 1 073 152
JP-A-59 141 735          JP-A-62 003 133
JP-A-62 182 445          JP-A-62 279 252
US-A- 4 756 290

• PATENT ABSTRACTS OF JAPAN vol. 011, no.
086 (M-572)17 March 1987 & JP-A-61 241 438
(NIPPON SOKEN INC) 27 October 1986
• PATENT ABSTRACTS OF JAPAN vol. 014, no.
217 (M-0970)8 May 1990 & JP-A-02 049 953
(TOYOTA MOTOR CORP) 20 February 1990

## Description

The present invention relates to an injection rate control system of a fuel injection system for a Diesel engine using a permeable actuator, according to US-A-4 730 585.

In the Diesel engine, it is known that the combustion noises and $NO_x$ can be effectively reduced if a main injection is preceded by a pilot injection in each injection cycle. In Japanese Patent Laid-Open Nos. 25925/1986 and 3133/1987, for example, there is disclosed a concept in which the pilot injection is performed by assembling an injection passage of an injection pump with a permeable actuator made extensible in accordance with a voltage applied thereto and by controlling the permeable actuator in a predetermined timing. Incidentally, the effects of reducing the combustion noises and the $NO_x$ cannot be obtained unless the timing of applying a high voltage to the permeable actuator, i.e., the pilot control timing is controlled to an optimum one. In the above-specified Japanese Patent Laid-Open No. 25925/1986, for example, there is disclosed a system , in which a voltage to be generated in the permeable actuator in proportion to the pump chamber pressure boosted by a plunger is detected to determine the pilot control timing when the detected voltage reaches a predetermined value.

Incidentally, this pilot injection timing is not constant relative to the main injection but becomes neither separate from the main injection nor optimum unless it is set earlier for the higher rotation speed, i.e., at an instant when the voltage generated by the permeable actuator is low. In other words, there arises a problem that an optimum pilot injection mode cannot be achieved in a range of at least a certain r.p.m. or more (e.g., about 2,000 r.p.m. in the number of engine revolution) unless the pilot is set before the voltage is generated. Especially in recent years, a demand for reducing the noises and the exhaust emission up to a high-speed and high-load range is raised to increase the necessity for executing the pilot injection in the optimum mode even in the high speed/load range.

A method of achieving a control timing free from the influences of the plunger lift is exemplified by one in which a highly accurate pump angle sensor is provided to set the control timing in accordance with the running state. An injection pump for injection under electronic control is usually equipped with the aforementioned angle sensor for the metering, but a complex map has to be newly set for determining the pilot injection timing. On the other hand, an injection pump for mechanical metering has to be newly equipped with a highly accurate angle sensor to raise another problem that the method requires a drastic change in the pump structure to raise the cost.

US-A-4 730 585 discloses an injection control system having a variable-capacity chamber which communicates with a high pressure chamber only at the beginning of injection (initial injection) for the purpose of preventing high load to the piezoelectric element. Control timing of the pilot injection begins when the voltage generated by the permeable actuator reaches a predetermined voltage during the initial injection and the variable-capacity chamber communicates with the high pressure chamber.

The present invention has been conceived in view of the problems thus far described and has an object to provide a control system for achieving an optimum pilot injection even at a high speed.

The present invention achieves said object by the additional features of the characterising part of claim 1. The open/close timing of a port for establishing communication between a variable-capacity chamber and a pump chamber in the previous injection is detected to determine the timing for executing the pilot injection in response to the detection signal.

Thanks to this structure, the pilot injection timing of this time can be determined from the starting point of a predetermined timing before the plunger starts its compression in the injection of this time. As a result, the determination of the pilot injection timing is promptly accomplished even at a high speed, and the execution of the pilot injection is not delayed, so that the pilot injection can be executed in the optimum mode.

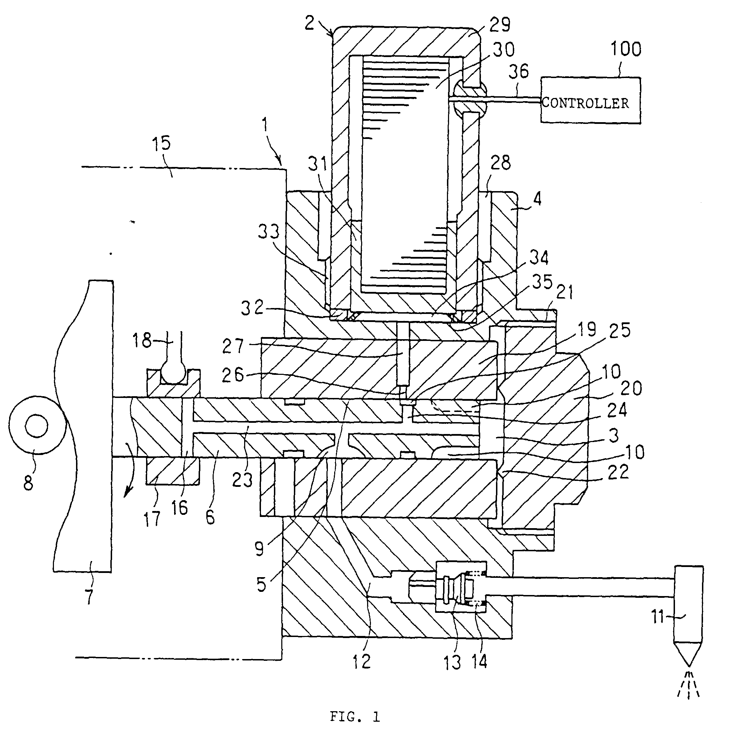

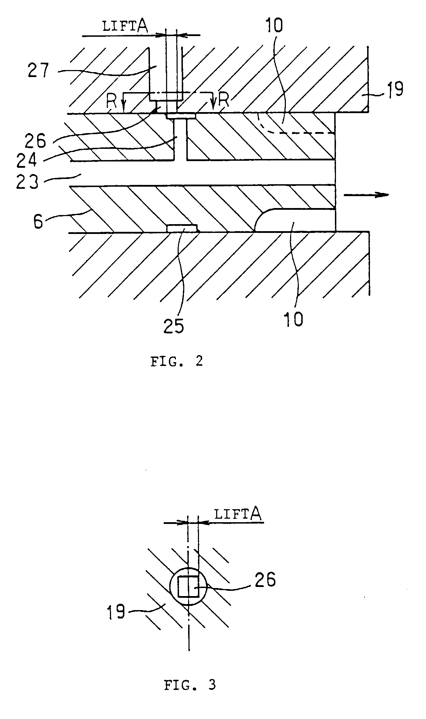

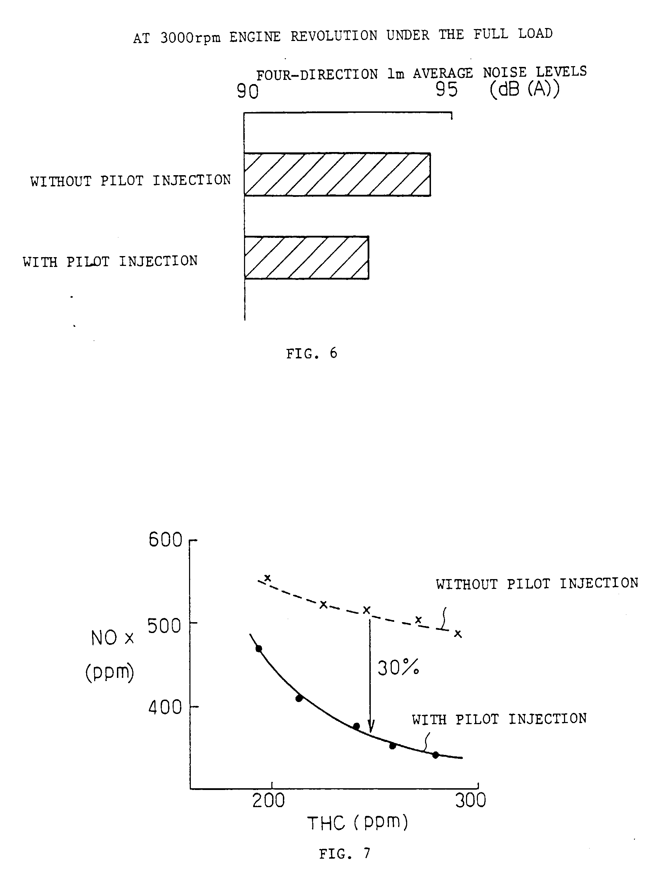

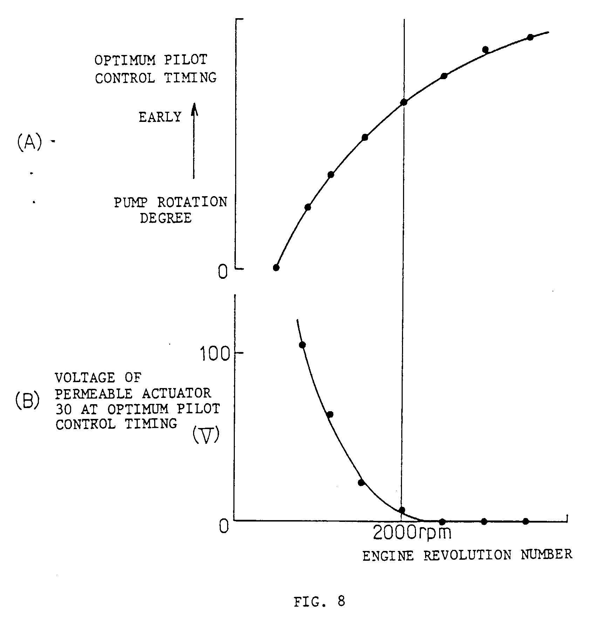

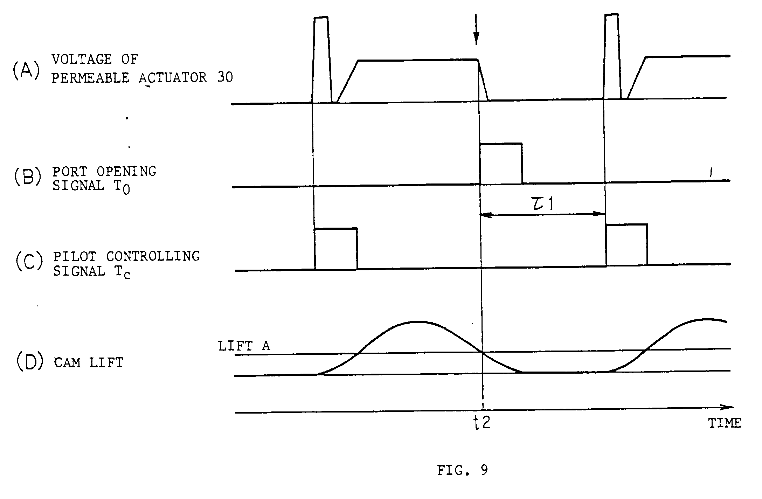

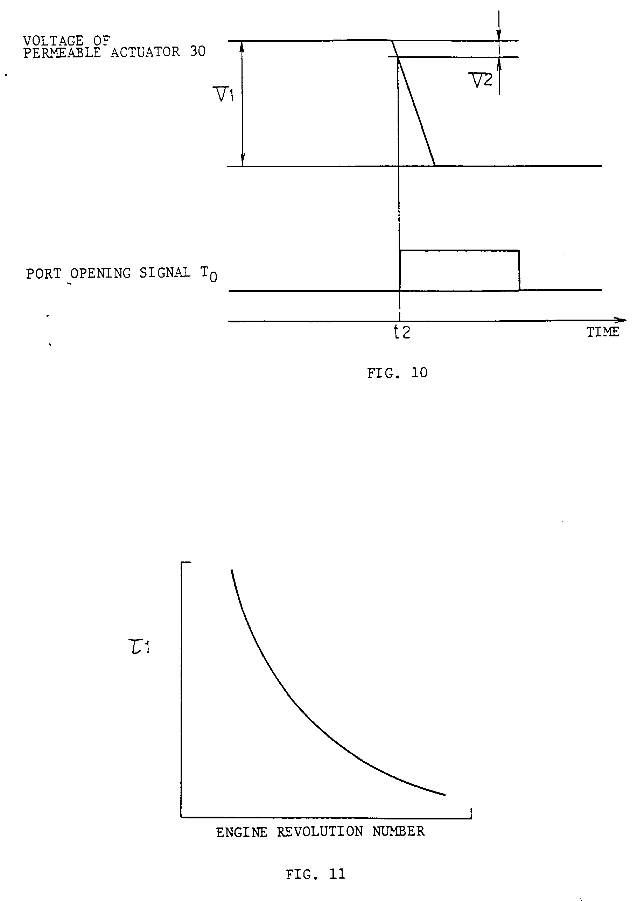

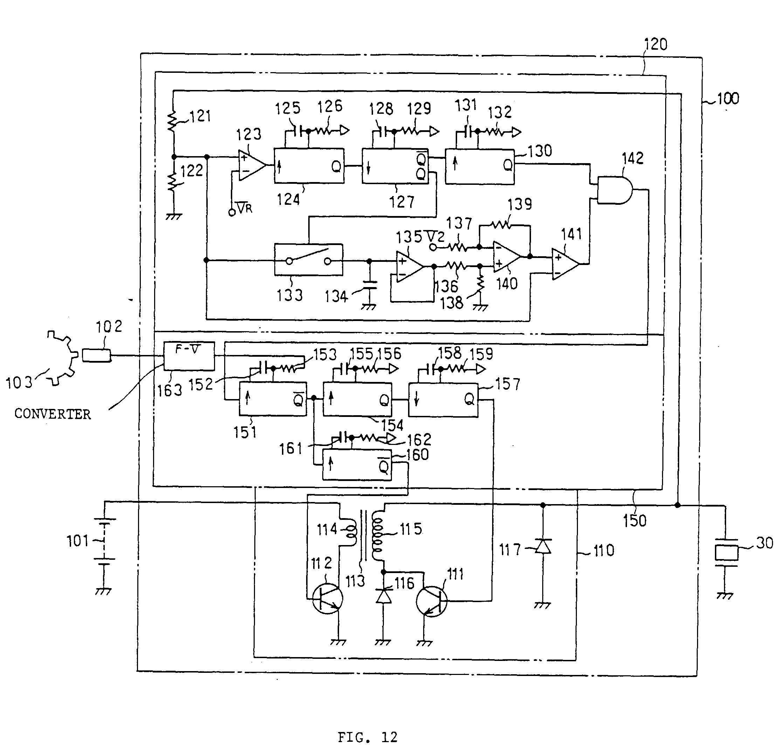

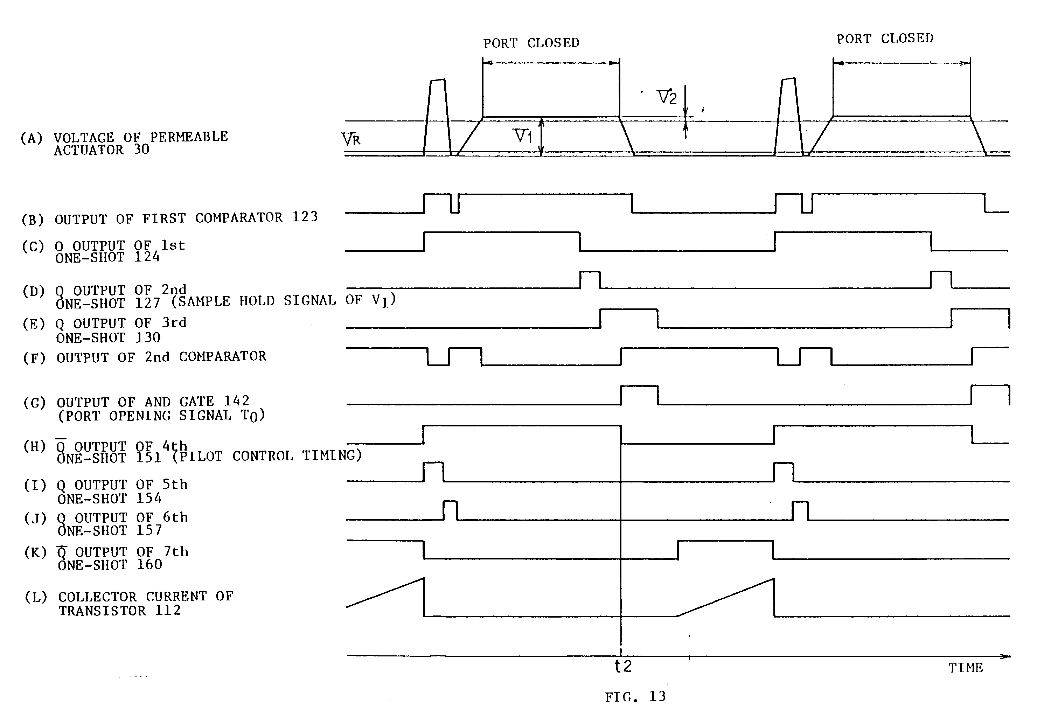

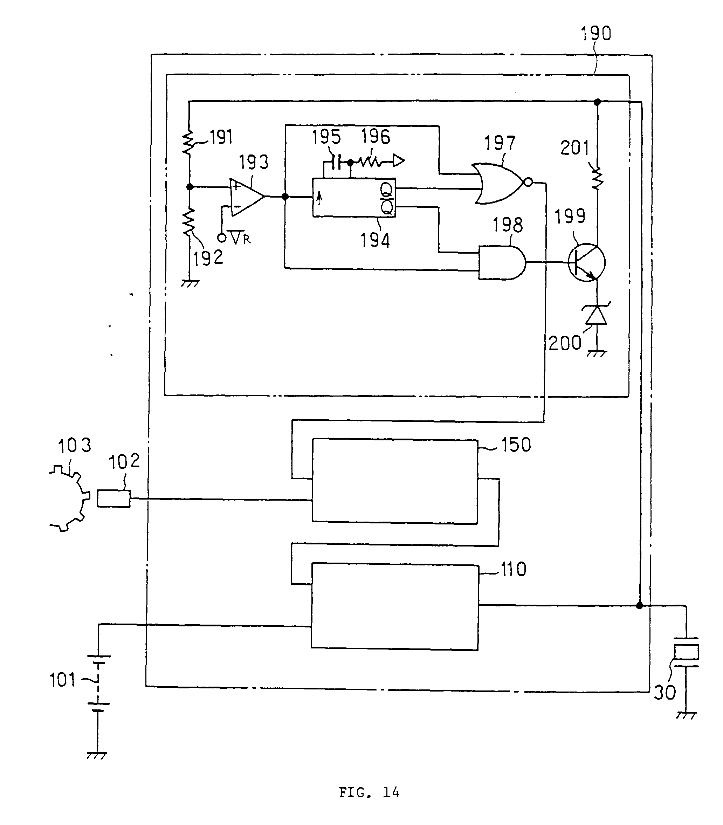

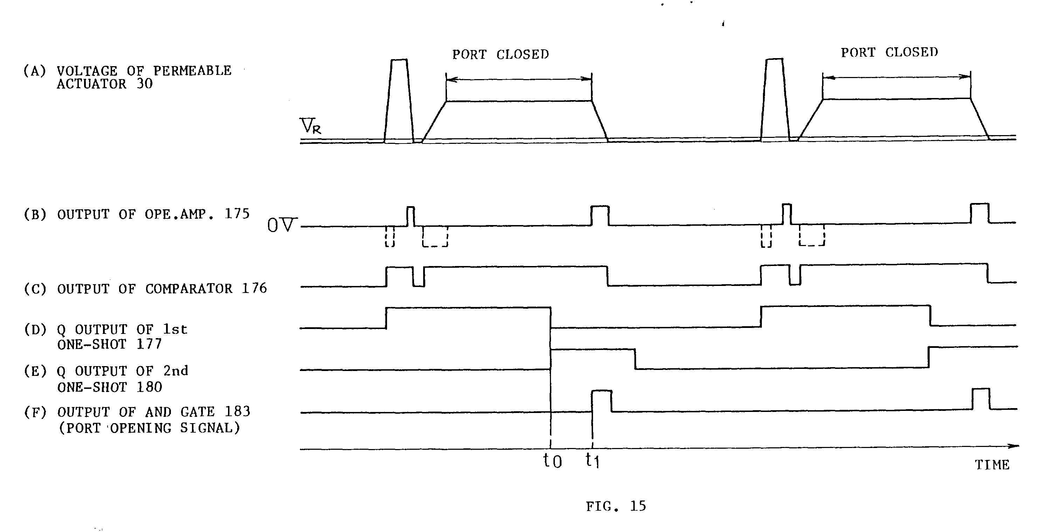

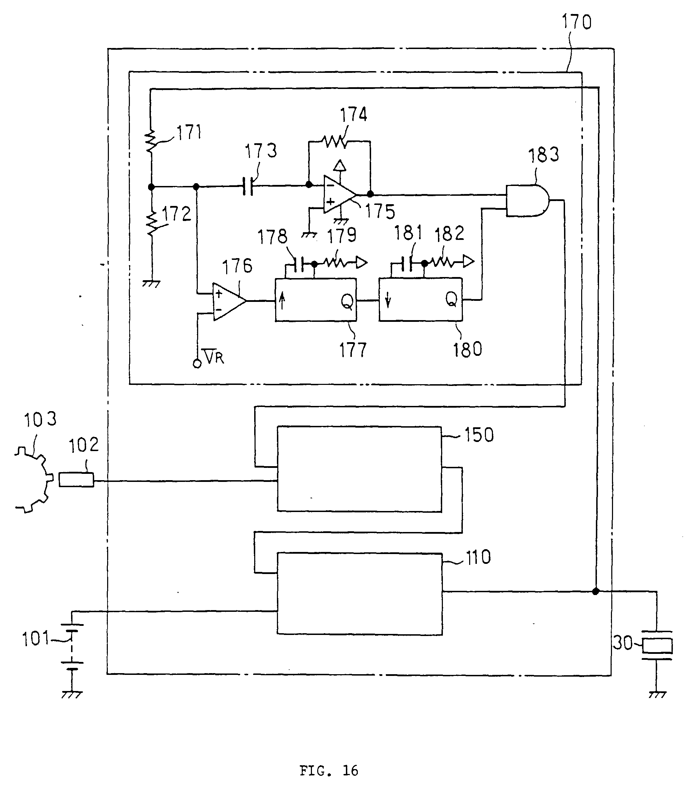

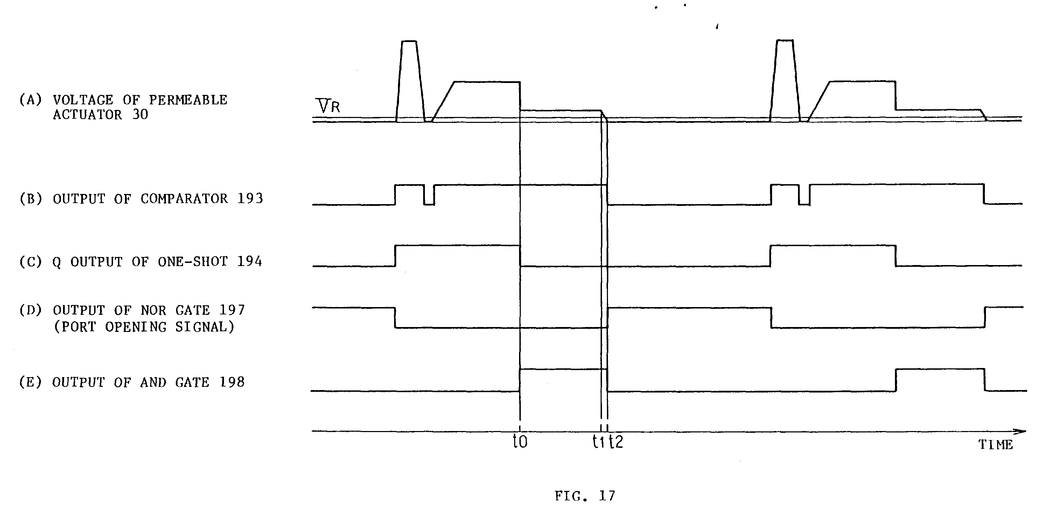

Fig. 1 is a partial section showing a system to which the present invention is applied; Fig. 2 is an enlarged section showing a portion of Fig. 1; Fig. 3 is a section taken along line R - R of Fig. 2; Figs. 4 and 5 are charts for explaining the operations of Fig. 1; Fig. 6 is a diagram showing the relation of noises with and without the pilot injection; Fig. 7 is a diagram showing the relations of the exhaust gas components with and without the pilot injection; Fig. 8 is a diagram for explaining the prior art; Figs. 9 and 10 are diagrams for explaining the present invention; Fig. 11 is a characteristic diagram of $\tau_1$ of Fig. 9; Fig. 12 is a diagram showing a circuit structure forming part of a first embodiment of the present invention; Fig. 13 is a chart explaining the operations of Fig. 12; Fig. 14 is a diagram showing a circuit structure forming part of a second embodiment of the present invention; Fig. 15 is a chart explaining the operations of Fig. 14; Fig. 16 is a diagram showing a circuit structure forming part of a third embodiment of the present invention; and Fig. 17 is a chart explaining the operations of Fig. 16.

A system according to the present invention will be described in the following in connection with the embodiments thereof. Fig. 1 is a diagram showing a structure of a fuel injection system according to the present invention. Fig. 2 is an enlarged section showing the vicinity of the leading end of a plunger 6 shown in Fig. 1, and Fig. 3 is a section taken along line R - R of Fig. 2.

In Fig. 1, an injection rate control unit 2 is attached to a fuel injection pump 1.

First of all, the fuel injection pump 1 will be described. The plunger 6 is slidably supported in the cylinder bore 5 of a pump casing 4 and is reciprocally rotated in synchronism with one half of the engine r.p.m. Specifically, the rotation of the engine is transmitted through the gear or timing belt to a drive shaft (although not shown) so that the plunger 6 is rotationally driven coaxially by the drive shaft and is reciprocally moved as a face cam 7 coupled integrally to the plunger 6 engages with a roller 8.

The face cam 7 is always urged leftward of the Drawing to abut against the roller 8 by the action of a spring (although not shown) so that the reciprocal motions of the plunger 6 are accomplished by the rotations on the axis following the contour of the cam face of the face cam 7. The plunger 6 is formed in its outer circumference with one distribution port 9 and intake ports 10 in the same number as that of engine cylinders. Between the leading end face of the plunger 6 and the cylinder bore 5, there is formed a pump chamber 3 which has its pressure boosted by the plunger 6.

The pump casing 4 is formed with a low-pressure chamber 15, a (not-shown) intake passage for establishing the communication of the low-pressure chamber 15 with the cylinder bore 5, and a distribution passage 12 for enabling each outside injection valve 11 to communicate with the cylinder bore 5. The number of distribution passages 12 to be formed is equal to that of the engine cylinders, and each of the distribution passages 12 is equipped with a delivery valve 13 in its midway. The delivery valve 13 can be opened against the action of a spring 14 and is given a function as a check valve and a function as a suction back valve.

Thus, when the plunger 6 moves leftward of Fig. 1 to expand the pump chamber 3, any intake port 10 communicates through the intake passage (although not shown) with the low-pressure chamber 15 so that the fuel in this chamber 15 is sucked into the pump chamber 3. When the plunger 6 moves rightward of Fig. 1, on the contrary, to constrict and compress the pump chamber 3, the distribution port 9 communicates with any distribution passage 12 so that the fuel in the pump chamber 3 is fed to the outside.

This feed of fuel is started when the plunger 6 begins its rightward movement and is ended when the plunger 6 moves rightward so that a spill port 16 is opened from the righthand end face of a spill ring 17 into the low-pressure chamber 15. Here, the spill port 16 is an opening which is formed in the plunger 6 to establish the communication between the pump chamber 3 and the low-pressure chamber 15, and the spill ring 17 has a shape of a short cylinder having a bore for allowing the plunger 6 to slide therein. The spill ring 17 can have its fixed position varied by a lever 18 to change the discharge of fuel from the pump chamber 3 in accordance with its position.

A blind plug 20 is screwed through threads 21 into the righthand end face of a cylinder 19 so that the pump chamber 3 is prevented from having its pressure leaking by means of an annular ridge 22 having a triangular section.

The fuel injection pump according to the present invention is further formed with: a port B 24 communicating municating with a center port 23 of the plunger 6 the pump chamber 3 and the spill port 16; and a groove 25 extending in the outer circumference of the plunger and communicating with said port B 24. Moreover, the cylinder 19 is formed with ports A 26 and C 27 opened into the cylinder bore 5.

The port A 26 and the circumferential groove 25 are positionally related to each other such that they communicate with each other till the plunger 6 takes a predetermined lift (i.e., a lift A shown in Fig. 2), as shown in an enlarged section in Fig. 2, and such that they are blocked from each other after the predetermined lift. Moreover, the port A 26 is given a square section taken along line R - R of Fig. 2, as shown in Fig. 3.

Next, the injection rate control unit 2 will be described in the following. This injection rate control unit 2 is disposed in a recess 28 of the pump casing 4. In a casing 29 inserted into the recess 28, as shown in Fig. 1, there are fitted a permeable actuator 30 and a piston 31, of which the former is positioned over the latter. A packing 32 is sandwiched between the lower end face of the casing 29 and the bottom face of the recess 28 of the pump casing 4. The casing 29 is fixedly screwed in the pump casing 4 while pushing the packing 32.

A variable-capacity chamber 34 is formed between the lower end face of the piston 31 and the bottom face of the pump casing recess 28 and is sealed up by the packing 32. In this variable-capacity chamber 34, there is arranged a leaf spring 35 for applying an upward pushing force always to the permeable actuator 30 through the piston 31. Moreover, the variable-capacity chamber 34 is in communication with the port C 27 and the port A 26. This port A is so controlled according to the lift position of the plunger 6 as to provide the communication between the pump chamber 3 and the variable-capacity chamber 34 when it is open.

In order to prevent the pressure of the variable-capacity chamber 34 from leaking through the piston to the permeable actuator 30, on the other hand, the piston 31 and the casing 29 have their sliding faces formed oil-tight while leaving a slight clearance necessary for their sliding motions.

The permeable actuator 30 is formed into a column shape by laminating about fifty sheets of permeable elements of thin discs ($\phi$ = 15 mm x t = 0.5 mm). This permeable element is made of a ceramic material called "PZT" having a major component of lead titanate-zirconate and will extend about 1 $\mu$m when a voltage of about 500 V is applied in its thickness direction. An extension of 50 $\mu$m is obtained as a whole if fifty elements are laminated and fed with 500 V in their thickness direction. The original length is restored by a contraction of 50 $\mu$m either if that voltage is released or a low negative voltage is applied. When a load of axial compression is applied to that permeable actuator 30, on the other hand, the permeable elements individually generate voltages proportional to the load applied. Under a load of 500 Kg, for example, a voltage of 500 V is generated. These characteristics of the permeable elements and the permeable actuator are well known in the art.

The operations of applying a voltage to, shorting and opening the permeable actuator 30 at a predetermined timing are controlled through a lead wire 36 by a controller 100 acting as an external control circuit.

The extension and contraction of the permeable actuator 30 are transmitted to the piston 31 to decrease and decrease the capacity of the variable-capacity chamber 34.

Next, the positional relation for opening/closing the port A 26 will be described in the following.

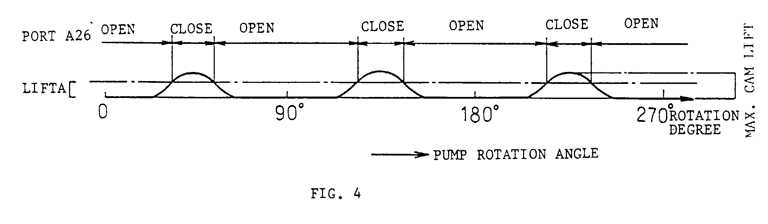

Fig. 4 is an operation explaining chart showing both the relation between the angle of rotation of the plunger 6 (or the face cam 7) of Fig. 1 and the lift of the plunger 6 and the opening state of the port A 26. Here, the angle of rotation of the plunger (or the face cam 7) is plotted on the abscissa. In the waveform of Fig. 4, the tops of the undulations at every 90 degrees indicate the reciprocations of the plunger 6, i.e., the lift of the face cam 7. The injection of fuel is executed while the face cam is lifting. Incidentally, the chart exemplifies the case of a pump for four cylinders.

The port A 26 is closed, when the face cam 7 is in a predetermined or more lift (as indicated at lift A in Figs. 2 and 4), and is otherwise closed. This lift A is set to a level slightly more than the cam lift when the pressure of the pump chamber 3 overcomes the valve opening pressure of the injection nozzle 11 so that it actually starts the injection.

Here, the "port A 26 opened" means the state, in which the port A 26 and the groove 25 formed in the outer circumference of the plunger 6 are allowed to communicate with each other, and the "port A 26 closed" means the state in which the communication between the port A 26 and the outer circumferential groove 25 of the plunger 6 is blocked.

As a result, when the cam lift, i.e., the pumping stroke of the pump starts, the pressure of the pump chamber 3, which is boosted by the plunger 6, is introduced into the variable-capacity chamber 34 by way of the central port 23 → the port B 24 → the groove 25 in the outer circumference of the plunger 6 → the port A 26 → the port C 27. When the plunger 6 lifts to the lift A, on the other hand, the port A 26 is blocked from the groove 25 in the outer circumference of the plunger 6 until it is closed. Since the variable-capacity chamber 34 is then blocked from the pump chamber 3 into its sealed-up state, the pressure at the blocking time is maintained thereafter as it is irrespective of the cam lift. After this, the plunger 6 passes over the maximum cam lift position and reaches the lift position of the lift A in the downward course. Then, the communication between the variable-capacity chamber 34 and the pump chamber 3 is restored, and the pressure kept in the variable-capacity chamber 34 is released into the pump chamber 3, which has already taken a low pressure, so that it drops to a low level.

In the present embodiment, moreover, the closing → opening timing of the port A 26 is detected and reflected on the determination of the control timing of the pilot injection. This will be described hereinafter in more detail.

Next, the actions/operations of the prior art thus constructed will be described in the following.

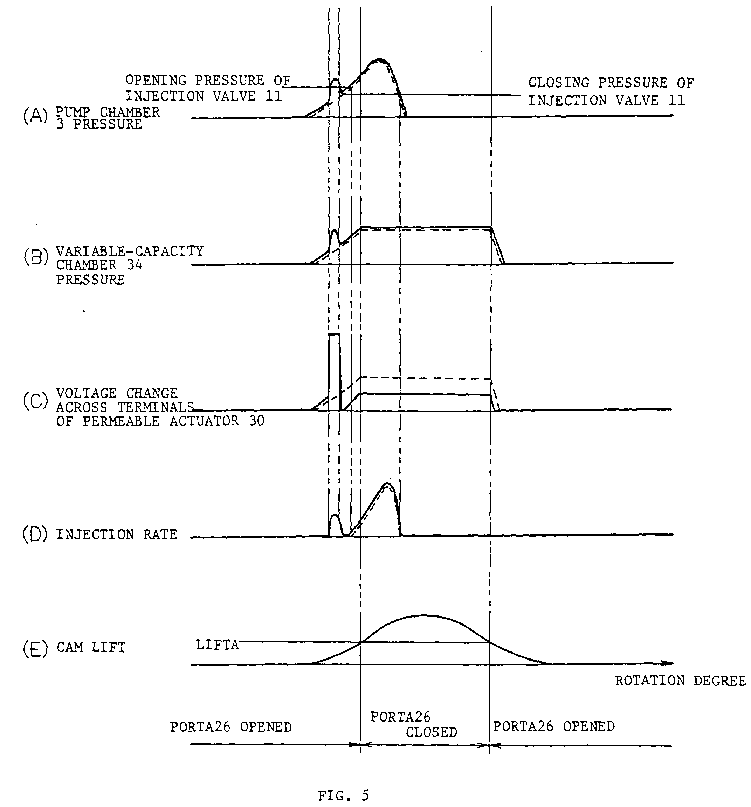

Fig. 5 is an operation explaining chart showing the state changes of the individual portions by plotting the angle of rotation of the plunger 6 (or the face cam 7) of Fig. 1 on the abscissa. In Fig. 5: (A) plots the pressure change in the pump chamber 3; (B) the pressure change in the variable-capacity chamber 34; (C) the voltage change across the terminals of the permeable actuator 30; (D) the injection rate change of the fuel from the injection valve 11; and (E) the cam lift of the face cam 7, which is formed integrally with the plunger 6, together with the opened/closed states of the port A 26.

When the permeable actuator 30 shown in Fig. 1 is not shorted, i.e., electrically opened, the pressure in the pump chamber 3 is plotted by the broken curve shown at (A) in Fig. 5. The top of the curve, as shown, indicates the rising stroke of the fuel pumping cam, and this stroke corresponds to the instant when the plunger 6 is moved rightward of Fig. 1 by the cam lift shown at (E) in Fig. 5 and when the spill port 16 is covered with the spill ring 17. The portion of the pressure above the opening/closing pressures of the injection valve 11 contributes to the injection. For this period, the injection valve 11 is opened to have its opening lift proportional to that pressure. Thus, the amount of injection is generally proportional to the same pressure.

The amount of fuel injected at unit time from the injection valve 11, namely, the fuel injection rate is plotted at (D) in Fig. 5.

When the pressure in the pump chamber 3 begins to rise in the fuel pumping stroke, as shown at (A) in Fig. 5, the pressure in the variable-capacity chamber 34 also begins to rise because the port A 26 and the pump chamber 3 are still in communication at this time.

The permeable actuator 30 produces electric charges proportional to the pressure at this time so that a voltage shown at (C) in Fig. 5 is generated.

When the pumping action further continues till the cam lift reaches the lift A shown at (E) in Fig. 5, the communication between the port A 26 and the pump chamber 3 is blocked. After this, the pumping action further continues so that not only the pressure in the pump chamber 3 but also the injection rate at (D) of Fig. 5 further continues to rise.

On the other hand, the pressure change of the variable-capacity chamber 34 at (B) of Fig. 5 is maintained with neither rise nor drop, because the variable-capacity chamber 34 forms a sealed-up chamber having no pressure release simultaneously as its communication with the port A 26 is blocked. The voltage generated by the permeable actuator 30 at (C) of Fig. 5 changes like the pressure in the variable-capacity chamber 34 at (B) of Fig. 5.

Here has been described the operation, in which the permeable actuator 30 is electrically opened, that is, in which no pilot injection is executed. Next, the operation with the injection rate being controlled will be described in the following.

Solid curves appearing in Fig. 5 indicate the states of the individual portions at the time of the pilot injection, i.e., the injection rate control.

When the pump begins its pumping action, the pressures in the pump chamber 3 and the variable-capacity chamber 34 rises to apply a pushing force proportional to the oil pressure to the permeable actuator 30 so that the terminal voltage of the permeable actuator 30 rises, as shown at (C) in Fig. 5. When this terminal voltage reaches a predetermined voltage (corresponding to the predetermined pressure before the valve opening pressure), a high voltage is applied to the permeable actuator 30 from the outside. Then, this permeable actuator 30 extends so that the pressure in the variable-capacity chamber 34 jumps to exceed the valve opening pressure, as indicated by the solid curve at (B) of Fig. 5. As a result, the fuel is injected from the nozzle 11, but the most of the work coming from the extension of the permeable actuator 30 is consumed to boost the oil pressure to a level higher than the valve opening pressure so that the discharge is 1 to 2. If the applied pressure of the permeable actuator 30 is released (as shown at (C) in Fig. 5) immediately after the permeable actuator 30 extends to effect the pilot injection, the permeable actuator 30 contracts to drop the pressure in the variable-capacity chamber 34 thereby to interrupt the injection (as shown at (D) in Fig. 5). In these ways, the pilot injection is realized. After this, the plunger 6 moves rightward so that the pressure in the pump chamber 3 rises again to effect the injection in the main portion.

After this, the pumping action continues till the cam lift reaches the lift A indicated at (E) in Fig. 5. Then, the communication between the port A 26 and the pump chamber 3 is blocked so that the pressure immediately before is confined in the variable-capacity chamber 34 (as indicated at (B) in Fig. 5). The voltage (as indicated at (C) in Fig. 5) generated by the permeable actuator 30 indicates a similar behavior.

After this, the compression stroke ends, and the cam lift enters the downward stroke. When the port A 26 restores its communication with the pump chamber 3, the pressure confined in the variable-capacity chamber 34 flows out toward a lower pressure portion and drops (as indicated at (B) in Fig. 5) because the pressure in the pump chamber 3 is at the field pressure. The voltage to be generated across the terminals of the permeable actuator 30 similarly varies (as indicated at (C) in Fig. 5).

Incidentally, there arises a demand for achieving the pilot injection till the high-speed/high-load operation of the engine in case the injection rate control unit 2 is to be applied especially to a direct injection Diesel engine. This demand is caused partly because especially the direct injection Diesel engine is troubled in recent years by the combustion noises at a high speed and under a high load and/or the exhaust emission such as $NO_x$/THC and partly because it has been found that the combustion noises and the exhaust emission can be reduced by performing the pilot injection, which has been effected in the prior art only under a low load, even at the high speed and under the high load. The effects of the pilot injection at the high speed and under the high load, as has been experimentally clarified by us, will be described in the following.

Fig. 6 shows the result obtained by metering the so-called "four-direction 1 m average noise levels", which were averaged from the noises metered from the engine noises at the maximum number of revolution (3,000 r.p.m.) and under the full load of the engine in the left, right, front and upper four directions at a distance of 1 m in an anechoic room, for the individual cases with and without the pilot injection. From these experiments, it has been found out that the effect of reducing the noise level by 1.5 dB is obtained by performing the pilot injection.

Moreover, Fig. 7 shows the result obtained by metering the exhausts of THC and $NO_x$ at the number of revolution of 2,720 r.p.m. and under the 3/4 load, for the individual cases with and without the pilot injection by using the injection starting timing as the parameter. The exhaust with the pilot injection could reduce the $NO_x$ by 30 % for the same THC, as compared with that without the pilot injection.

As could be seen from Figs. 6 and 7, the pilot injection at the high speed and under the high load in the direct injection Diesel engine is remarkably effective for reducing the engine noises and the exhaust emissions. In the existing pilot control system described hereinbefore, however, the pilot injection control at the high speed cannot be effected due to the following problems.

In the pilot control system of the prior art, the permeable actuator 30 naturally generates the voltage when the pump begins its pumping action, as has been described before. The pilot control is timed when the generated voltage reaches a predetermined level. Here, the optimum pilot control timing for achieving the optimum pilot injection mode at the individual numbers of revolution of the engine is plotted at (A) in Fig. 8. As seen from (A) of Fig. 8, the optimum pilot control is timed for the higher engine r.p.m. and for the earlier angle of cam rotation, that is, when the voltage generated by the permeable actuator 30 is low (as indicated at (B) in Fig. 8). Especially for the engine r.p.m. of 2,000 or more, the generated voltage of the permeable actuator corresponding to the optimum pilot injection timing is as low as 0 V. This raises a problem that the optimum pilot injection mode cannot be obtained by the existing system in which the pilot control is timed by detecting the generated voltage of the permeable actuator 30 for the engine r.p.m. of 2,000 r.p.m. or more.

Next, a first embodiment applied to the structure of Figs. 1 to 4 will be described with reference to Fig. 9. The terminal voltage of the permeable actuator 30 at the time of the pilot control is plotted at (A) in Fig. 9. The timing, as indicated by arrow ↓ at (A) in Fig. 9, is the timing at which the port A 26 is subjected to "close" → "open" (as will be shortly referred to as the "port open timing"). In the present embodiment, this port open timing $T_o$ is decided from the voltage waveform (as indicated at (A) in Fig. 9) of the permeable actuator to determine the pilot control timing by metering the time or angle with respect to that timing. In the time metering case, the port open signal, as indicated at (B) in Fig. 9, is produced at the port open timing, and a pilot control signal $T_C$ (as indicated at (C) in Fig. 9) is produced a predetermined time $\tau_1$ lapse after the port open signal $T_o$ to apply a high voltage to the permeable actuator 30, as indicated at (A) in Fig. 9. The method of deciding the port open timing specifically from the voltage waveform of the permeable actuator 30 will be described hereinafter.

This port open timing corresponds to the instant of the lift A while the cam lift of (D) of Fig. 9 is dropping, that is, to the predetermined cam angle of the injection pump in one-to-one relation. Thus, the reference to this port open timing is superior to a method, in which a signal is produced at a predetermined crank angle of the engine, for example, by a magnetic resistance element (MRE) or a magnetic pickup (MPU) and is used as a reference position. Specifically, a reference signal obtained always corresponds to the pumping action of the injection pump with being less influenced by the characteristics of the advance angle of the injection pump or the dispersion in the initial set position of the injection pump. Since, moreover, the present method exploits the permeable actuator 30 itself as a sensor, it has a merit that no new sensor is required to raise no cost.

Incidentally, if in the time control for determining the pilot injection timing by the time from the timing $T_o$, the pilot control timing to the cam angle may be dispersed, if influenced by high fluctuations of the engine revolution, to lose the stable pilot injection. In a low revolution range with high fluctuations, therefore, the control method of the prior art may be performed by adopting the instant, at which the generated voltage of the permeable actuator 30 reaches a predetermined voltage, as the pilot control timing. This may be switched to the method referring to the port open/close timings only in the high r.p.m. range (of about 2,000 r.p.m.) in which the optimum pilot control timing at the high revolution side has little voltage generated by the permeable actuator 30.

Next, a specific method of deciding the port open timing from the terminal voltage of the permeable actuator 30 will be described with reference to Fig. 10. Fig. 10 shows in an enlarged scale the vicinity of the port open timing, as indicated by arrow ↓ in Fig. 9. When the port A 26 is closed (as will be shortly referred to as the "port close time"), a voltage $V_1$ is held in the permeable actuator 30. When the port A 26 is opened, the voltage drops, and the signal $T_o$ is issued by exemplifying the port open timing by the instant $t_2$, at which the terminal voltage of the permeable actuator 30 drops to a voltage $V_2$ lower than the voltage $V_1$. Incidentally, the voltage $V_2$ is set to such a predetermined level as will not be influenced by the voltage $V_1$. According to this method, therefore, the port open signal $T_o$ is always obtained at the same cam angle position even if the voltage $V_1$ fluctuates while the port is closed.

The time period (i.e., $\tau_1$ appearing in Fig. 9) after the port open signal $T_o$ and before the pilot control signal $T_C$ is produced has to be set in accordance with the engine r.p.m., and its value is inversely proportional to the engine r.p.m., as shown in Fig. 11, that is, the period $\tau_1$ is made the shorter for the higher r.p.m.

Next, the controller 100 acting as the control circuit of the actuator 30 will be described in the following.

Fig. 12 is a circuit diagram showing the detail of the controller 100 of Fig. 1.

In Fig. 12, reference numeral 120 designates a port open timing decision circuit (i.e., open/close timing detecting means) for determining the port open signal (i. e., $T_o$ of Fig. 10). The terminal voltage of the permeable actuator 30 is divided by resistors 121 and 122 into 1/250, one of which is connected with a non-inverted input of a first comparator 123, another of which is connected with an analog switch 133, and the last of which is connected with an inverted input of a second comparator 141. The first comparator 123, a first one-shot multivibrator 124 and a second one-shot multivibrator 127 are used to set a period for sample-holding the port close voltage (i.e., $V_1$ of Fig. 10). With an inverted input terminal of the first comparator 123, there is connected a reference voltage $V_R$. This voltage $V_R$ corresponds to 40 V, i.e., the terminal voltage of the permeable actuator 30. The output of the first comparator 123 is connected with a rising trigger input terminal of the first one-shot multivibrator 124. The output pulse width of the first one-shot multivibrator 124 is determined by a capacitor 125 and a resistor 126 to set the time till the sample hold of the voltage $V_1$ is started. The Q output terminal of the first one-shot multivibrator 124 is connected with a breaking trigger input terminal of the second one-shot multivibrator 127. The output pulse width of the second one-shot multivibrator 127 is determined to 500 $\mu$ secs by a capacitor 128 and a resistor 129. This time period is one for sample-holding the voltage $V_1$. The Q output of the second one-shot multivibrator 127 is connected with a control input of the analog switch 133.

The analog switch 133 is turned on, when the control input takes the "1" level, to output the voltage which is divided from the voltage of the permeable actuator 30. The output of the analog switch 133 is connected with a sample-hold capacitor 134 and a non-inverted input terminal of a first operation amplifier 135. This first operation amplifier has its inverted input terminal connected with the output terminal so that it acts as a high-impedance buffer for preventing the charges of the aforementioned capacitor 134 from leaking. The output signal of the first operation amplifier 135 is applied through a resistor 136 to a non-inverted input terminal of a second operation amplifier 140 and a resistor 138, whereas the reference voltage $V_2$ is applied through a resistor 137 to the inverted input terminal of the second operation amplifier and through a resistor 139 to the same output terminal. These second operation amplifier 140 and resistors 137, 138, 139 and 140 constitute the so-called "differential amplifier", and all of these resistors 137, 138, 139 and 140 are given an equal resistance so that the output voltage value of the second operation amplifier 140 takes a voltage value which is a subtraction of the reference voltage $V_2$ from the output voltage value of the first operation amplifier 135. The reference voltage $V_2$ corresponds to the terminal voltage of 40 V of the permeable actuator 30 and accordingly to the voltage $V_2$ in Fig. 10.

The output of the second operation amplifier 140 is the non-inverted input of the second comparator 141 and is compared with the voltage of the permeable actuator 30. In other words, the output of the second comparator 141 takes the value "1" when the voltage of the permeable actuator 30 becomes lower than the output value of the second operation amplifier 140.

Moreover, a $\overline{Q}$ output of the second one-shot multivibrator 127 provides a rising trigger input of a third one-shot multivibrator 130.

This third one-shot multivibrator 130 has its output width determined by a capacitor 131 and a resistor 132 to act as a mask of the port open signal. Reference numeral 142 designates a two-input AND gate, which has its one input terminal connected with the Q output terminal of the third one-shot multivibrator 130 and its other input terminal connected with the output terminal of the second comparator 141. Moreover, the port open signal is outputted to the output of the two-input AND gate 142.

A circuit 150 is a pilot injection timing determining circuit (i.e., pilot injection timing determining means) for determining the pilot injection control timing and for feeding a signal to drive a drive circuit 110. The port open signal of the circuit 120 is connected with a rising trigger input terminal of a fourth one-shot multivibrator 151.

Moreover, reference numeral 102 designates a rotation sensor for detecting the engine r.p.m. by making use a magnet pickup, for example. This rotation sensor 102 is juxtaposed to a disc 103, which is mounted on the drive shaft of the pump and has projections, to output a signal having a frequency responding to the engine r.p.m. This signal is connected with the so-called "F-V converter" 163 for converting a frequency into a voltage so that the F-V converter 163 outputs a voltage proportional to the engine r.p.m. This output is connected with a resistor 153 so that the output pulse width of the fourth one-shot multivibrator 151 is determined according to the output voltage of the F-V converter 163 by a capacitor 152 and the resistor 153. As a result, the size of the pulse width of the output signal of the fourth one-shot multivibrator 151 is an output pulse width inversely proportional to the engine r.p.m. resembling that of Fig. 11. Moreover, this output pulse width the time (i.e., $\tau_1$ of Fig. 9) from the port open timing to the pilot control timing.

Specifically, the rise of the $\overline{Q}$ output signal of the fourth one-shot multivibrator 151 is the pilot control timing. The $\overline{Q}$ output signal of the fourth one-shot multivibrator 151 is a rising trigger input of a fifth one-shot multivibrator 154. This fifth one-shot multivibrator 154 has its output pulse width determined to about 500 $\mu$ secs by a capacitor 155 and a resistor 156. For this time period, a high voltage is applied to the permeable actuator 30, as will be described hereinafter, so that the permeable actuator 30 extends to expel the fuel. The Q output of the fifth one-shot multivibrator 154 is a breaking trigger input of a sixth one-shot multivibrator 157. This sixth one-shot multivibrator 157 has its output pulse width determined to 300 $\mu$ secs by a capacitor 158 and a resistor 159. For this time period, the permeable actuator 30 is shorted, as will be described hereinafter. The Q output of the sixth one-shot multivibrator 157 is a base input of a transistor 111.

On the other hand, the fourth one-shot multivibrator 151 has its $\overline{Q}$ output terminal connected with a rising trigger input terminal of a seventh one-shot multivibrator 160. This seventh one-shot multivibrator 160 has its output pulse width determined by a capacitor 161 and a resistor 162 and its $\overline{Q}$ output signal inputted to the base of a transistor 112 to turn on and off it.

Next, the drive circuit 110 will be described in the following. This drive circuit 110 is exemplified by a car battery of 24 V, the power supply of which is connected with one terminal of a primary coil 114 of an iron core transformer 113 which has a number of silicon steel sheets laminated, for example. The other terminal of the primary coil 113 is connected with the collector of the transistor 112 so that the electric current to flow through the primary coil 114 is switched by turning on and off the transistor 112. The transformer 113 is wound with a secondary coil 115. The turn ratio of the primary coil 114 and the secondary coil 115 is determined to about four times as high as that of the primary side by considering the voltage to be generated at the secondary side and the rising time of the secondary voltage.

The secondary coil 115 has its one end connected with the permeable actuator 30 and its other end connected with the cathode of a diode 116 and the collector of the transistor 111. Thus, when the permeable actuator 30 is shorted, a discharge circuit leading from the permeable actuator 30 through the secondary coil 115 to the transistor 111 is established by turning on the transistor 111. At the time of applying the voltage to the permeable actuator, on the other hand, a charge circuit for feeding the charges to the permeable actuator 30 through the diode 116 and the secondary coil 115 is established by turning off the transistor 111. Incidentally, reference numeral 117 designates a diode for protecting the permeable actuator 30 against an inverse voltage.

Next, the operations of the circuit structure of Fig. 12 will be described in the following. Fig. 13 is a chart showing the waveforms of the individual portions to be used for the description.

When in the pilot control, the terminal voltage of the permeable actuator 30 has a voltage waveform, as shown at (A) in Fig. 13. When this terminal voltage is equal to or higher than the reference voltage $V_R$, the output level of the first comparator 123 takes the "1" level (as shown at (B) in Fig. 13). As a result, the first one-shot multivibrator 124 is triggered to set the starting time for sample-holding the terminal voltage $V_1$ of the permeable actuator 30 at the port close time (as shown at (C) in Fig. 13). At the break of the first one-shot multivibrator 124, moreover, the second one-shot multivibrator 127 is triggered so that pulses are generated for 500 $\mu$ secs as the Q output of the second one-shot multivibrator 127 (as shown at (D) in Fig. 13). As a result, the analog switch 133 is turned on so that the terminal voltage $V_1$ (as shown at (A) in Fig. 13) of the permeable actuator 30 at the port close time is stored in the sample-hold capacitor 134 and outputted to the first operation amplifier 135. Moreover, there is established as the output of the second operation amplifier 140 the voltage value which is calculated by subtracting the reference voltage $V_2$ (as shown at (A) in Fig. 13) set at 40 V from the output voltage value of the first operation amplifier 135 by the differential amplifier which is composed of the second operation amplifier 140 and the resistors 136, 137, 138 and 139. In short, the output of the second operation amplifier 140 takes a voltage value of ($V_1$ - $V_2$). Then, this voltage value is compared with the terminal voltage of the permeable actuator 30 by the second comparator 141. If the terminal voltage of the permeable actuator 30 is lower than the output voltage ($V_1$ - $V_2$) of the second operation amplifier 140, the output of the second comparator 141 takes the "1" level (as shown at (F) in Fig. 13).

On the other hand, the third one-shot multivibrator 130 is triggered with the break of the $\overline{Q}$ output signal of the second one-shot multivibrator 127 so that pulses are generated for the set mask time period (as shown at (E) in Fig. 13). Moreover, the Q output of this third one-shot multivibrator 130 and the output of the second comparator 141 are inputted to the two-input AND gate 142, which produces its AND signal as the port open signal (as shown at (G) in Fig. 13). Moreover, the pilot control timing is determined with reference to the port open signal.

The output of the two-input AND gate 142 triggers the fourth one-shot multivibrator 151 for a predetermined time period. This predetermined time period is that determined from Fig. 1, for example. Specifically, the rising timing of the $\overline{Q}$ output signal of the fourth one-shot multivibrator 151 is the pilot control timing (as shown at (H) in Fig. 13).

The $\overline{Q}$ output of the fourth one-shot multivibrator 151 triggers the seventh one-shot multivibrator 160 (as shown at (K) in Fig. 13) to determine the ON timing of the transistor 112. If this transistor 112 is turned on, the current flowing through the primary coil 114 increases with time (as shown at (L) in Fig. 13). At the pilot control timing, namely, when the $\overline{Q}$ output signal of the seventh one-shot multivibrator 160 is turned off, the transistor 112 is turned off so that the energy stored in the primary coil 114 rises to a high voltage and is applied from the secondary coil 115 to the permeable actuator 30 (as shown at (A) in Fig. 13). By this application of the high voltage, the permeable actuator 30 extends to raise the pressure in the variable-capacity chamber 34 so that the pilot injection is started from the nozzle 11.

On the other hand, the $\overline{Q}$ output signal of the fourth one-shot multivibrator 151 triggers the fifth one-shot multivibrator 154 (as shown at (I) in Fig. 13) and triggers the sixth one-shot multivibrator 157 500 $\mu$ secs after so that pulses are generated for 300 $\mu$ secs in the Q output of the sixth one-shot multivibrator 157 (as shown at (J) in Fig. 13). By these pulses, the transistor 111 is turned on to short the permeable actuator 30 through the secondary coil 115 (as shown at (A) in Fig. 13). As a result, the permeable actuator 30 contracts so that the pressures in the variable-capacity chamber 34 and the pump chamber 3 drop to end the pilot injection. After this, the plunger still continues its action to pump the fuel so that the pressure in the pump chamber 3 rises again to start the main injection before long.

Next, a second embodiment of the present invention will be described in the following.

What is different from the first embodiment resides in the method of deciding the port open timing from the terminal voltage of the permeable actuator 30. In the present embodiment, more specifically, the port open timing is decided by differentiating the aforementioned terminal voltage.

The terminal voltage of the permeable actuator 30 is divided into 1/250 by resistors 171 and 172 and is connected with a differential circuit which is composed of a capacitor 173, a resistor 174 and an operation amplifier 175. Since the operation amplifier 175 is supplied with a positive voltage only as its power source, only the breaking signal of the input waveform of the capacitor 173 is generated as the output of the operation amplifier 175.

On the other hand, the terminal voltage of the permeable actuator 30, which is divided by the resistors 171 and 172, is also connected with a non-inverted input terminal of a comparator 176. The comparator 176 is provided together with a first one-shot multivibrator 177 and a second one-shot multivibrator 180 for masking the port open signal. As the inverted input of the comparator 176, there is applied the reference voltage $V_R$. This voltage $V_R$ corresponds to 40 V, i.e., the terminal voltage of the permeable actuator 30. The output terminal of the comparator 176 is connected with a rising trigger input terminal of the first one-shot multivibrator 177. This one-shot multivibrator 177 has its output pulse width determined by a capacitor 178 and a resistor 179 to set the time period till a predetermined timing $t_o$ of the port close period. The first one-shot multivibrator 177 has its Q output terminal connected with the breaking trigger input terminal of the second one-shot multivibrator 180. This second one-shot multivibrator 180 has its output pulse width determined by a capacitor 181 and a resistor 182 to set the masking time period.

Reference numeral 183 designates a two-input AND gate, which has its one input terminal connected with the output terminal of the operation amplifier 175 and its other terminal connected with the Q output terminal of the second one-shot multivibrator 180. From the output terminal of the two-input AND gate 183, moreover, there is outputted a port open signal indicating the port open timing $t_1$. This signal is fed to the aforementioned pilot injection timing determining circuit 150 for generating a signal to determine the pilot control timing and to drive the drive circuit 110.

The operations of the second embodiment thus constructed will be described with reference to the waveform charts of the individual portions of Fig. 15.

At the output of the operation amplifier 175, there is outputted a differentiated waveform of the terminal voltage (as shown at (A) in Fig. 15) of the permeable actuator 30, namely, a waveform indicating the changing rate of the aforementioned terminal voltage (as shown at (B) in Fig. 15). Although the waveform including the broken lines of (B) in Fig. 15 should be intrinsically outputted, not any negative voltage but the waveform indicated by the solid lines of (B) in Fig. 15 is outputted because the power supply of the operation amplifier 175 is only the positive voltage, as has been described hereinbefore.

If the terminal voltage of the permeable actuator 30 exceeds the reference voltage $V_R$, on the other hand, the output of the comparator 176 takes the "1" level (as shown at (C) in Fig. 15). As a result, the first one-shot multivibrator 177 is triggered to set the time period till the masking start (as shown at (D) in Fig. 15). Simultaneously with the break of the first one-shot multivibrator 177, moreover, the second one-shot multivibrator 180 is triggered to set the masking time from this instant (as shown at (E) in Fig. 15). Then, the output signal of the operation amplifier 175 and the Q output signal of the second one-shot multivibrator 180 are inputted to the two-input AND gate 183 so that this AND gate 183 outputs the port open signal (as shown at (F) in Fig. 15).

Since the change in the terminal voltage of the permeable actuator 30 as a result that the port is opened is directly captured by making use of the differential waveform, the second embodiment is advantageous over the first embodiment in that the circuit structure is simplified.

Next, a third embodiment will be described in the following.

The present embodiment is different from the first and second embodiments in the method of deciding the port open timing from the terminal voltage of the permeable actuator 30. Specifically, the present embodiment is equipped with means for controlling the terminal voltage of the permeable actuator forcibly to a predetermined constant voltage when in the port opening operation so that the port open timing may be deemed as an instant when the terminal voltage of the permeable actuator 30 drops to a level lower than the aforementioned constant voltage or a fixed voltage value.

Fig. 16 shows a structure of the control circuit of the third embodiment.

The detail is omitted because the drive circuit 110 and the pilot injection timing determining means 150 other than a port opening timing decision circuit 190 for determining the port open signal are identical to those of the first embodiment.

The permeable actuator 30 has its terminal voltage applied through a current limiting resistor 201 to the collector of a transistor 199. This transistor 199 has its emitter connected to the cathode of a constant voltage diode 200 which exhibits characteristics for an electric current to flow under an inverse voltage of 100 V or higher. As a result, when the transistor 199 is turned on, the terminal voltage of the permeable actuator 30 is set to 100 V if it is equal to or higher than 100 V.

On the other hand, the terminal voltage of the permeable actuator 30 is divided into 1/250 by resistors 191 and 192 and is applied, too, to a non-inverted input of a comparator 193. Here, the reference voltage $V_R$ is applied to the inverted input terminal of the comparator 193. This comparator 193 has its output branched into three outputs, the first one of which is a rising trigger input of a one-shot multivibrator 194. This one-shot multivibrator 194 has its output pulse width determined by a capacitor 195 and a resistor 196 to set a time period for turning on the transistor 199. The second output of the comparator 193 is inputted to one input terminal of a two-input NOR gate 197, which is further fed with the Q output signal of the one-shot multivibrator 194 as its other input. The output signal of this two-input NOR gate is the port open signal, which is fed to the pilot injection control timing determining circuit 150. Moreover, the third output of the comparator 193 is inputted to one input terminal of a two-input AND gate 198, which is further fed with the Q output signal of the one-shot multivibrator 194 as its other input. Moreover, the output terminal of the two-input AND gate 198 is connected with the base of the transistor 199 to determine the timing for controlling the terminal voltage of the permeable actuator 30 when in the port closing operation.

The operations of the third embodiment thus constructed will be described with reference to the waveform charts of the individual portions of Fig. 17.

When the terminal voltage of the permeable actuator 30 shown at (A) in Fig. 17 exceeds the reference voltage $V_R$, the output of the comparator 193 takes the "1" level (as shown at (B) in Fig. 17). As a result, the one-shot multivibrator 194 is triggered so that the $\overline{Q}$ output signal of the one-shot multivibrator 194 continues the "1" level till the time $t_o$ at which the port is closed (as shown at (C) in Fig. 17). On the contrary, the Q output of the one-shot multivibrator 194 takes the "1" level from the time $t_o$ so that a signal of (E) in Fig. 17 is obtained by taking an AND between the "1" level and the output of the comparator 193. As a result, the transistor 199 is turned on so that the terminal voltage of the permeable actuator 30 on and after the time $t_o$ when the port is closed is dropped to the set voltage 100 V of the Zener diode 200 (as shown at (A) in Fig. 17). If the port is then opened at the time $t_1$, the terminal voltage of the permeable actuator 30 drops. When this terminal voltage drops to 40 V, the output of the comparator 193 is switched from "1" to "0" (as shown at (B) in Fig. 17). Thus, if a NOR between the output of the comparator 193 and the $\overline{Q}$ output of the one-shot multivibrator 194 is taken, a signal is obtained, as shown at (D) in Fig. 17. The rising timing $t_2$ of this signal is the port open timing.

Since, in the present embodiment, the terminal voltage of the permeable actuator 30 before the port is opened is forcibly controlled to an identical constant value (100 V) at all times, the port open signal will not disperse even the port open decision level is fixed (at 40 V).

Incidentally, in the method of any of the aforementioned embodiments, a high voltage is applied to the permeable actuator at the pilot control timing and is shorted immediately after. However, the present invention should not be limited to that method but can also be applied to the method in which the voltage built up in the permeable actuator at the pilot timing is shorted, the method in which a voltage in the direction opposed to the direction of polarization of the permeable actuator is applied, or the method in which the charge of the permeable actuator is extracted by a capacitor.

For determining the pilot control timing from the detection of the port open timing, moreover, the time $\tau_1$ is used as a parameter. Despite of this fact, however, the pilot injection may be controlled by providing an angle sensor for detecting the angle of rotation of the injection pump or the engine and by using the detected angle as a parameter. In case the time is used as the parameter, moreover, the map of Fig. 11 may be stored in a microcomputer so that the pilot injection control timing may be determined by making use of the timer stored in the computer.

Still moreover, the present invention can be likewise applied to a metering system of the injection pump, in which a mechanical governor or an electronic control is used.

Although the timing for the port A 26 to open in the previous injection stroke is used as a starting point for computing the pilot injection timing, the timing for the port A 26 to close may naturally be used as the starting point.

Incidentally, the foregoing embodiments are enabled to require no new sensor and to have a simple structure and a low cost by exploiting the permeable actuator itself for controlling the pilot injection as the sensor when the port open/close timing is to be detected. This detection of the port open/close timing may naturally be accomplished by either another pressure sensor or a sensor for detecting the lift position of the plunger.

## INDUSTRIAL APPLICABILITY

As has been described in detail hereinbefore, according to the present invention, the pilot injection timing is determined on the basis of the open/close timing of the variable-capacity chamber in the previous injection stroke so that the pilot injection can be executed in the optimum mode, even if the Diesel engine runs at a high speed, to reduce the noises at the high speed and the exhaust emission.

**Claims**

1. A pilot injection control system including a variable-capacity chamber (34) having communication with a pump chamber (3) via a port (26) which is opened or closed in a predetermined lift position in the compression course of a plunger (6) for compressing said pump chamber (3), so that a pilot injection prior to a main injection is executed by controlling the capacity of said variable-capacity chamber (34) at a predetermined timing in the open period of said port (26) by means of a permeable actuator (30), comprising:

   open/close timing detecting means (120) for detecting an open/close timing of said port (26) changing from open to close state or an open/close timing of said port changing from close to open state, characterized by
   pilot injection timing determining means (150) for determining said predetermined timing in response to a signal coming from said open/close timing detecting means (120) and being generated in dependence of the open/close timing of said port (26) in the previous injection, wherein said open/close timing detecting means (120) detects said port open/close timing on the basis of a voltage generated by said permeable actuator (30).

2. A pilot injection control system as set forth in Claim 1, characterized in that said pilot injection timing determining means (150) includes period determining means (151) for computing a predetermined period ($\tau_1$) between executing timing of said pilot injection and said open/close timing.

3. A pilot injection control system as set forth in Claim 2, characterized by a means (102,103,163) for detecting an engine r.p.m. and wherein said period determining means (151) determines said predetermined period ($\tau_1$) by using said engine r.p.m. as a parameter.

4. A pilot injection control system as set forth in Claim 1, characterized in that said open/close timing detecting means (120) detects the timing, at which the voltage generated by said permeable actuator (30) drops to a predetermined voltage value, as said port open/close timing.

5. A pilot injection control system as set forth in Claim 4, characterized in that said predetermined voltage value is set to a level which is lower by a predetermined voltage than the voltage value of said permeable actuator (30) while said pump chamber (3) and said variable-capacity chamber (34) are blocked from each other.

6. A pilot injection control system as set forth in Claim 4, characterized in that the voltage value of said permeable actuator (30) while said pump chamber (3) and said variable-capacity chamber (34) are blocked is set to a constant voltage value ($V_1$).

7. A pilot injection control system as set forth in Claim 1, characterized by pilot injection means for executing the pilot injection by driving said permeable actuator (30) when the pressure in said pump chamber (3) reaches a predetermined value for the open period of said port (26) in the injection of this time, so that said pilot injection means may be actuated in place of said pilot injection timing determining means (150) in accordance with the running condition.

8. A pilot injection control system as set forth in Claim 1, characterized in that said open/close timing detecting means (120) detects said port open/close timing on the basis of a differentiated waveform of the voltage which is generated by said permeable actuator (30).

**Patentansprüche**

1. Steuersystem für eine Voreinspritzung mit einer variablen Kapazitätskammer (34), die über eine Öffnung (26), die bei einer vorbestimmten Hubposition beim Kompressionsverlauf eines Druckkolbens (6) zum Komprimieren der Pumpenkammer (3) geöffnet oder geschlossen wird, mit der Pumpenkammer (3) derart in Verbindung steht, daß eine Voreinspritzung vor einer Haupteinspritzung durch Steuerung der Kapazität der variablen Kapazitätskammer (34) zu einem vorbestimmten Zeitpunkt während der Öffnungs-Zeitdauer der Öffnung (26) mittels eines permeablen Stellglieds (30) ausgeführt wird, mit:

einer Offen/Geschlossen-Zeitpunkt-Erfassungsvorrichtung (120) zum Erfassen eines Offen/Geschlossen-Zeitpunkts der Öffnung (26), bei der die Öffnung von einem offenen zu einem geschlossenen Zustand oder von einem geschlossenen zu einem offenen Zustand wechselt, gekennzeichnet durch
eine Voreinspritzungs-Zeitpunkt-Bestimmungsvorrichtung (150) zum Bestimmen des vorbestimmten Zeitpunkts in Abhängigkeit von einem von der Offen/Geschlossen-Zeitpunkt-Erfassungsvorrichtung (120) kommenden Signal, welches in Abhängigkeit vom Offen/Geschlossen-Zeitpunkt der Öffnung (26) während eines vorhergehenden Einspritzvorgangs erzeugt wird, wobei die Offen/Geschlossen-Zeitpunkt-Erfassungsvorrichtung (120) den Offen/Geschlossen-Zeitpunkt der Öffnung auf der Grundlage einer durch das permeable Stellglied (30) erzeugten Spannung erfaßt.

2. Steuersystem für eine Voreinspritzung gemäß Patentanspruch 1, dadurch gekennzeichnet, daß die Voreinspritzungs-Zeitpunkt-Bestimmungsvorrichtung (150) eine Zeitdauer-Bestimmungsvorrichtung (151) zum Berechnen einer vorbestimmten Zeitdauer ($\tau_1$) zwischen dem Ausführungszeitpunkt der Voreinspritzung und dem Offen/Geschlossen-Zeitpunkt aufweist.

3. Steuersystem für eine Voreinspritzung gemäß Patentanspruch 2, gekennzeichnet durch eine Vorrichtung (102, 103, 163) zum Erfassen einer Motordrehzahl, wobei die Zeitdauer-Bestimmungsvorrichtung (151) die vorbestimmte Zeitdauer ($\tau_1$) unter Verwendung der Motordrehzahl als einen Parameter bestimmt.

4. Steuersystem für eine Voreinspritzung nach Patentanspruch 1, dadurch gekennzeichnet, daß die Offen/Geschlossen-Zeitpunkts-Erfassungsvorrichtung (120) den Zeitpunkt, bei dem die vom permeablen Stellglied (30) erzeugte Spannung unter einen vorbestimmten Spannungswert fällt, als Offen/Geschlossen-Zeitpunkt der Öffnung erfaßt.

5. Steuersystem für eine Voreinspritzung nach Patentanspruch 4, dadurch gekennzeichnet, daß der vorbestimmte Spannungswert auf einem Pegel eingestellt wird, der um eine vorbestimmte Spannung kleiner ist als der Spannungswert des permeablen Stellglieds (30), während die Pumpenkammer (3) und die variable Kapazitätskammer (34) voneinander getrennt sind.

**6.** Steuersystem für eine Voreinspritzung nach Patentanspruch 4, dadurch gekennzeichnet, daß der Spannungswert des permeablen Stellglieds (30) auf einen konstanten Spannungswert (V$_1$) eingestellt ist, während die Pumpenkammer (3) und die variable Kapazitätskammer (34) voneinander getrennt sind.

**7.** Steuersystem für eine Voreinspritzung nach Patentanspruch 1, gekennzeichnet durch eine Voreinspritzungs-Vorrichtung zum Ausführen der Voreinspritzung durch Ansteuern des permeablen Stellglieds (30), wenn der Druck in der Pumpenkammer (3) einen vorbestimmten Wert der Offen-Zeitdauer der Öffnung (26) im gleichen Einspritzvorgang erreicht, so daß die Voreinspritzungs-Vorrichtung anstelle der Voreinspritzungs-Zeitpunkt-Bestimmungsvorrichtung (150) entsprechend der Laufbedingung betätigt wird.

**8.** Steuersystem für eine Voreinspritzung nach Patentanspruch 1, dadurch gekennzeichnet, daß die Offen/Geschlossen-Zeitpunkt-Erfassungsvorrichtung (120) den Offen/Geschlossen-Zeitpunkt der Öffnung auf der Grundlage eines differenzierten Kurvensignals der vom permeablen Stellglied (30) erzeugten Spannung erfaßt.

## Revendications

**1.** Système de commande de pré-injection comprenant une chambre à capacité variable (34) ayant une communication avec une chambre de pompe (3) par l'intermédiaire d'un accès (26) qui est ouvert ou fermé dans une position de levée prédéterminée dans la course de compression d'un piston (6) destiné à comprimer ladite chambre de pompe (3), de sorte que l'on exécute une pré-injection avant une injection principale en commandant la capacité de ladite chambre à capacité variable (34) au moyen d'un actionneur piézoélectrique (30) à un instant prédéterminé dans la période d'ouverture dudit accès (26), comprenant :

un moyen de détection d'instant d'ouverture/fermeture (120) destiné à détecter un instant d'ouverture/fermeture dudit accès (26) passant d'un état ouvert à un état fermé ou un instant d'ouverture/fermeture dudit accès passant d'un état fermé à un état ouvert, caractérisé par un moyen de détermination d'instant de pré-injection (150) destiné à déterminer ledit instant prédéterminé en réponse à un signal provenant dudit moyen de détection d'instant d'ouverture/fermeture (120) et qui est généré suivant l'instant d'ouverture/fermeture dudit accès (26) lors de l'injection précédente, dans lequel ledit moyen de détection d'instant d'ouverture/fermeture (120) détecte ledit instant d'ouverture/fermeture de l'accès sur la base d'une tension générée par ledit actionneur piézoélectrique (30).

**2.** Système de commande de pré-injection selon la revendication 1, caractérisé en ce que ledit moyen de détermination de l'instant de pré-injection (150) comprend un moyen de détermination d'intervalle de temps (151) destiné à calculer un intervalle de temps prédéterminé ($\tau_1$) entre l'instant d'exécution de ladite pré-injection et ledit instant d'ouverture/fermeture.

**3.** Système de commande de pré-injection selon la revendication 2, caractérisé par un moyen (102, 103, 163) destiné à détecter un régime de moteur et dans lequel ledit moyen de détermination d'intervalle de temps (151) détermine ledit intervalle de temps prédéterminé ($\tau_1$) en utilisant ledit régime moteur comme paramètre.

**4.** Système de commande de pré-injection selon la revendication 1, caractérisé en ce que ledit moyen de détection d'instant d'ouverture/fermeture (120) détecte l'instant auquel la tension générée par ledit actionneur piézoélectrique (30) chute jusqu'à une valeur de tension prédéterminée, en tant que dit instant d'ouverture/fermeture de l'accès.

**5.** Système de commande de pré-injection selon la revendication 4, caractérisé en ce que ladite valeur de tension prédéterminée est établie à un niveau qui est inférieur d'une tension prédéterminée à la valeur de tension dudit actionneur piézoélectrique (30) pendant que ladite chambre de pompe (3) et ladite chambre à capacité variable (34) sont bloquées l'une par rapport à l'autre.

**6.** Système de commande de pré-injection selon la revendication 4, caractérisé en ce que la valeur de tension dudit actionneur piézoélectrique (30) pendant que ladite chambre de pompe (3) et ladite chambre à capacité variable (34) sont bloquées, est réglée à une valeur de tension constante (V$_1$).

**7.** Système de commande de pré-injection selon la revendication 1, caractérisé par un moyen de pré-injection destiné à exécuter la pré-injection en attaquant ledit actionneur piézoélectrique (30) lorsque la pression dans ladite chambre de pompe (3) atteint une valeur prédéterminée pendant la période d'ouverture dudit accès (26) dans l'injection en cours, de sorte que ledit moyen de pré-injection peut être actionné à la place dudit moyen de détermination de l'instant de pré-injection (150) conformément aux conditions de fonctionnement.

8. Système de commande de pré-injection selon la revendication 1, caractérisé en ce que ledit moyen de détection d'instant d'ouverture/fermeture (120) détecte ledit instant d'ouverture/fermeture de l'accès sur la base d'une forme d'onde différentiée de la tension qui est générée par ledit actionneur piézoélectrique (30).

FIG. 1

FIG. 2

FIG. 3

FIG. 4

16

EP 0 504 401 B1

(A) PUMP CHAMBER 3 PRESSURE

OPENING PRESSURE OF INJECTION VALVE 11

CLOSING PRESSURE OF INJECTION VALVE 11

(B) VARIABLE-CAPACITY CHAMBER 34 PRESSURE

(C) VOLTAGE CHANGE ACROSS TERMINALS OF PERMEABLE ACTUATOR 30

(D) INJECTION RATE

(E) CAM LIFT

LIFTA

ROTATION DEGREE

PORTA26 OPENED

PORTA26 CLOSED

PORTA26 OPENED

FIG. 5

17

AT 3000rpm ENGINE REVOLUTION UNDER THE FULL LOAD

FOUR-DIRECTION 1m AVERAGE NOISE LEVELS
90                    95    (dB (A))

WITHOUT PILOT INJECTION

WITH PILOT INJECTION

FIG. 6

NO x
(ppm)

600

500

400

200          300
THC (ppm)

WITHOUT PILOT INJECTION

30%

WITH PILOT INJECTION

FIG. 7

(A)

OPTIMUM PILOT
CONTROL TIMING

EARLY ↑

PUMP ROTATION
DEGREE

0

(B)

VOLTAGE OF
PERMEABLE ACTUATOR
30 AT OPTIMUM PILOT
CONTROL TIMING (∇)

100

0

2000rpm

ENGINE REVOLUTION NUMBER

FIG. 8

(A) VOLTAGE OF
PERMEABLE ACTUATOR 30

(B) PORT OPENING
SIGNAL $T_0$

$\tau 1$

(C) PILOT CONTROLLING
SIGNAL $T_c$

(D) CAM LIFT

LIFT A

$t2$

TIME

FIG. 9

20

VOLTAGE OF
PERMEABLE ACTUATOR 30

$V_1$

$V_2$

PORT OPENING SIGNAL $T_0$

$t2$

TIME

FIG. 10

$\tau_1$

ENGINE REVOLUTION NUMBER

FIG. 11

FIG. 12

(A) VOLTAGE OF PERMEABLE ACTUATOR 30

(B) OUTPUT OF FIRST COMPARATOR 123

(C) Q OUTPUT OF 1st ONE-SHOT 124

(D) Q OUTPUT OF 2nd ONE-SHOT 127 (SAMPLE HOLD SIGNAL OF $V_1$)

(E) Q OUTPUT OF 3rd ONE-SHOT 130

(F) OUTPUT OF 2nd COMPARATOR

(G) OUTPUT OF AND GATE 142 (PORT OPENING SIGNAL $T_0$)

(H) $\overline{Q}$ OUTPUT OF 4th ONE-SHOT 151 (PILOT CONTROL TIMING)

(I) Q OUTPUT OF 5th ONE-SHOT 154

(J) Q OUTPUT OF 6th ONE-SHOT 157

(K) $\overline{Q}$ OUTPUT OF 7th ONE-SHOT 160

(L) COLLECTOR CURRENT OF TRANSISTOR 112

PORT CLOSED    PORT CLOSED

$V_R$    $V_1$    $V_2$

t2    TIME

FIG. 13

EP 0 504 401 B1

FIG. 14

EP 0 504 401 B1

(A) VOLTAGE OF PERMEABLE ACTUATOR 30

PORT CLOSED

PORT CLOSED

$V_R$

(B) OUTPUT OF OPE.AMP. 175

0V

(C) OUTPUT OF COMPARATOR 176

(D) Q OUTPUT OF 1st ONE-SHOT 177

(E) Q OUTPUT OF 2nd ONE-SHOT 180

(F) OUTPUT OF AND GATE 183 (PORT OPENING SIGNAL)

$t_0$   $t_1$

TIME

FIG. 15

FIG. 16

(A) VOLTAGE OF PERMEABLE
    ACTUATOR 30

(B) OUTPUT OF COMPARATOR 193

(C) Q OUTPUT OF ONE-SHOT 194

(D) OUTPUT OF NOR GATE 197
    (PORT OPENING SIGNAL)

(E) OUTPUT OF AND GATE 198

$V_R$

t0          t1 t2                      TIME

FIG. 17

EP 0 504 401 B1